# EUROPÄISCHE PATENTSCHRIFT

(11) **EP 2 774 266 B1**
(45) Veröffentlichungstag und Bekanntmachung des Hinweises auf die Patenterteilung: **06.06.2018**
(21) Anmeldenummer: 12784541.0
(22) Anmeldetag: 30.10.2012
(51) Int. Cl.: H02P 27/06, H02P 25/22, H02P 29/02, H02M 1/32

(54) **VERFAHREN UND VORRICHTUNG ZUM BETREIBEN EINER ELEKTRONISCH KOMMUTIERTEN ELEKTRISCHEN MASCHINE IN EINEM FEHLERFALL**
METHOD AND APPARATUS FOR OPERATING AN ELECTRONICALLY COMMUTATED ELECTRICAL MACHINE IN THE EVENT OF A FAULT
PROCÉDÉ ET DISPOSITIF POUR FAIRE FONCTIONNER UNE MACHINE ÉLECTRIQUE À COMMUTATION ÉLECTRONIQUE EN CAS DE DÉFAILLANCE

(30) Priorität: 03.11.2011 DE 102011085657
(43) Veröffentlichungstag der Anmeldung: 10.09.2014
(73) Patentinhaber: Robert Bosch GmbH, 70442 Stuttgart (DE)
(72) Erfinder: DITTMER, Berndt, 71640 Ludwigsburg (DE); HOFFMANN, Ekkehard, 70469 Stuttgart (DE)
(86) Internationale Anmeldenummer: PCT/EP2012/071430
(87) Internationale Veröffentlichungsnummer: WO 2013/064474

(56) Entgegenhaltungen:
- EP-A1- 2 009 782
- DE-A1- 10 223 139
- DE-A1-102010 001 241
- DE-A1-102011 005 973
- US-A1- 2011 074 333

## Beschreibung

### Technisches Gebiet

Die vorliegende Erfindung betrifft elektronisch kommutierte elektrische Maschinen, insbesondere mehrphasige elektrische Maschinen, die mithilfe einer Treiberschaltung angesteuert werden. Die Erfindung betrifft weiterhin Maßnahmen zur Ansteuerung der elektrischen Maschine in einem Fehlerfall.

### Stand der Technik

Elektronisch kommutierte elektrische Maschinen, beispielsweise zum Einsatz in elektrischen Antrieben, werden mithilfe einer Treiberschaltung (Umrichter) angesteuert. Die Treiberschaltung weist dazu Halbleiterschalter auf, die gemäß einem Kommutierungsschema versetzt zueinander schalten, um Phasenstränge der elektrischen Maschine zu bestromen. Beispielsweise kann eine solche Treiberschaltung für eine dreiphasige elektrische Maschine in Form einer so genannten B6-Schaltung ausgeführt werden, die drei Halbbrücken aufweist, die jeweils zwei in Reihe geschaltete Halbleiterschalter umfassen. Die Halbbrücken dienen zum Generieren jeweils einer Phasenspannung. An die Halbbrücken ist eine Versorgungsspannung angelegt und die entsprechende Phasenspannung wird an einem jeweiligen Knoten zwischen den Halbleiterschaltern jeder Halbbrücke abgegriffen.

Im Betrieb der elektrischen Maschine kann es zu Ausfällen der Halbleiterschalter kommen, wodurch diese in einen permanent geschlossenen Zustand gelangen können. Dies kann zu einem hohen Bremsmoment führen, wenn ein hoher Strom durch die Phasenwicklung einer oder mehrerer der Phasenstränge der elektrischen Maschine fließt.

Aus dem Stand der Technik sind Maßnahmen bekannt, um das Auftreten der Bremsmomente zu reduzieren. Beispielsweise können zusätzliche Schalter in das System eingebaut werden, wie beispielsweise ein Phasentrennrelais oder ein Sternpunktrelais, die im Fehlerfall geöffnet werden und den Stromfluss in den Phasensträngen der elektrischen Maschine unterbinden. Diese Maßnahmen haben jedoch den Nachteil, dass aufgrund der zusätzlich notwendigen Bauelemente die Baugröße der elektrischen Maschine erhöht wird. Weiterhin entstehen durch die Schalter bzw. Relais zusätzliche ohmsche Verluste, die sich leistungsbeschränkend auswirken können. Aufgrund der zusätzlich benötigten Bauteile sind der Montageaufwand und die Kosten erhöht und es besteht eine zusätzliche Fehlerquelle, die die Zuverlässigkeit der elektrischen Maschine reduziert.

Bei Auftreten eines Fehlers, z.B. eines Fehlers, bei dem ein niederohmiger Strompfad permanent über einen der Halbleiterschalter geschaltet ist, besteht weiterhin die Möglichkeit, alle Schalter der Treiberschaltung in einen bestimmten Zustand zu schalten und in diesem Zustand zu belassen. Dadurch kann beispielsweise ein Dreiphasenkurzschluss oder ein Öffnen aller Schalter erreicht werden.

Diese Aufgabe wird durch das Verfahren zum Betreiben einer elektrischen Maschine gemäß Anspruch 1 sowie durch die Vorrichtung (Anspruch 10), das Motorsystem und das Computerprogrammprodukt gemäß den nebengeordneten Ansprüchen gelöst.

Die Druckschrift DE 10 2010 001 241 A1 offenbart einen elektronisch kommutierten Elektromotor, der durch eine Leistungsendstufe mit Halbleiterschaltern angesteuert wird. Eine Steuereinheit ist ausgebildet, in Abhängigkeit eines durch Defekt niederohmig verbundenen oder kurzgeschlossenen Halbleiterschalters der Leistungsendstufe den Stator zum Erzeugen des Drehfeldes derart anzusteuern, dass der Rotor über eine volle Rotorumdrehung hinweg eine mechanische Leistung abgeben kann oder ein durch den Defekt verursachtes Bremsmoment des Elektromotors im Betriebszustand mit dem niederohmig verbundenen oder kurzgeschlossenen Halbleiterschalter reduziert oder vollständig kompensiert ist.

Die Druckschrift DE 10 2011 005 973 A1 offenbart ein Verfahren zum Betrieb eines bürstenlosen Elektromotors, dessen Wicklungen von einem Wechselrichter mit Hilfe von sechs Schalter angesteuert werden, wobei eine Erkennungseinheit zum Erkennen von defekten Schaltern, eine Einheit zur Spannungsmessung an den Ausgängen des Wechselrichters und ein Mikrocontroller zum Steuern der Schalter und zur Erzeugung einer pulsweitenmodulierten Spannungsversorgung der Wicklungen vorgesehen ist. Nach Erkennung eines leitend defekten Schalters werden die Wicklungen derart angesteuert, dass ein im Mittel positives Motormoment erzeugt wird.

Die Druckschrift US 2011/0074333 A1 offenbart ein Steuergerät zum Steuern einer mehrphasigen elektrischen Maschine mithilfe einer Mehrzahl von Invertereinheiten. Im Fall eines Kurzschlusses in einer der Invertereinheiten werden die Schalter der Invertereinheiten in einen ausgeschalteten Zustand gebracht.

Die Druckschrift DE102 23 139 A1 offenbart einen elektronisch kommutierbaren Motor mit einer vorzugsweise dreisträngigen Erregerwicklung im Stator, welche zur Erzeugung eines Drehmomentes für einen Dauermagnet-Rotor über eine mit Halbleiterschaltern bestückte Kommutierungsanordnung und eine Motorsteuerung an eine Gleichspannungsquelle anschließbar ist. Mithilfe von zusätzlichen oder vorhandenen Schaltmittel kann ein im Falle eines Windungsschlusses und/oder eines Fehlers in den Halbleiterschaltern der Kommutierungsanordnung auftretendes vom Motor erzeugtes Bremsmoment unterbunden oder zumindest teilweise kompensiert werden.

Die Druckschrift EP 2 009 782 A1 offenbart ein Steuergerät für eine mehrphasigen elektrischen Maschine mit einem Inverter und mit einer Stromsteuereinrichtung, die einen unnormalen Zustand in den der elektrischen Maschine erkennen kann, wobei eine oder mehrere der Phasen, in denen der normale Zustand erkannt worden ist, von der Stromzufuhr getrennt werden und die übrigen Phasen mithilfe einer individuellen Stromsteuerung angesteuert werden.

Es ist Aufgabe der vorliegenden Erfindung, ein Verfahren und eine Vorrichtung zum Betreiben einer elektrischen Maschine bei Auftreten eines Fehlerfalls zur Verfügung zu stellen, durch die ein unerwünschtes Verhalten der elektrischen Maschine vermieden werden kann, insbesondere wodurch das Bremsmoment reduziert werden kann und die Nachteile durch das Vorsehen zusätzlicher Bauelemente vermieden werden können.

### Offenbarung der Erfindung

Weitere vorteilhafte Ausgestaltungen der vorliegenden Erfindung sind in den abhängigen Ansprüchen angegeben.

Gemäß einem ersten Aspekt ist ein Verfahren zum Betreiben einer mehrphasigen elektrischen Maschine in einem Fehlerfall vorgesehen, wobei die elektrische Maschine mithilfe einer Treiberschaltung angetrieben wird, wobei die Treiberschaltung Halbbrückenschaltungen, die jeweils einer Phase zugeordnet sind, und Brückenzweige zum Verbinden oder Trennen von vorbestimmten Spannungspotentialen mit bzw. von den jeweiligen Phasen der elektrischen Maschine aufweist, wobei, wenn ein Fehler festgestellt wird, einer oder mehrere der Brückenzweige gemäß einer ersten Fehlerbetriebsart betrieben werden, wobei in der ersten Fehlerbetriebsart der eine oder die mehreren Brückenzweige so angesteuert werden, dass sie ein erstes der vorbestimmten Spannungspotentiale über einen definierten elektrischen Widerstand mit der Phase verbinden.

Eine Idee des obigen Verfahrens besteht darin, in einem Fehlerfall, in dem einer der Brückenzweige der Treiberschaltung eine Phase permanent mit einem der vorbestimmten Spannungspotentiale verbindet, d. h. permanent leitend ist, mindestens eine der weiteren Phasen der elektrischen Maschine über einen der übrigen Brückenzweige mit dem gleichen Versorgungspotential zu verbinden, mit dem der defekte Brückenzweig verbunden ist, und die betreffende Brückenschaltung teilangesteuert zu betreiben, so dass diese einen erhöhten Widerstand aufweist.

Es wurde erkannt, dass eine Erhöhung des Widerstands bei einem Phasenschluss nach dem Auftreten eines Fehlers gegenüber einem quasi widerstandslosen Phasenschluss den Vorteil aufweist, dass bei gleicher Drehzahl das Bremsmoment geringer ist.

Insbesondere kann der Fehler einem Kurzschluss zwischen zwei Phasen, einem Kurzschluss einer Phase zu einem Spannungspotential oder einem dauerhaft geöffneten Brückenzweig entsprechen.

Gemäß einer Ausführungsform kann vorgesehen sein, dass, wenn als ein Fehler festgestellt wird, dass einer der Brückenzweige fehlerhaft ist und eine Phase der elektrischen Maschine permanent mit dem ersten vorbestimmten Spannungspotential verbindet, einer oder mehrere der übrigen Brückenzweige, die zum Verbinden oder Trennen der übrigen Phasen mit bzw. von dem ersten vorbestimmten Spannungspotential vorgesehen sind, in einer ersten Fehlerbetriebsart betrieben werden, wobei in der ersten Fehlerbetriebsart die entsprechenden Brückenzweige so angesteuert werden, dass sie das erste vorbestimmte Spannungspotential über einen definierten elektrischen Widerstand mit der Phase verbinden.

Es kann vorgesehen sein, dass der eine oder die mehreren übrigen Brückenzweige, die zum Verbinden oder Trennen der übrigen Phasen mit bzw. von dem ersten vorbestimmten Spannungspotential vorgesehen sind, in der ersten Fehlerbetriebsart betrieben werden, wenn eine Drehzahl der elektrischen Maschine unter einer vorgegebenen Schwellendrehzahl liegt.

In der ersten Fehlerbetriebsart können die übrigen Brückenzweige, die zum Verbinden oder Trennen der übrigen Phasen mit bzw. von einem zweiten der vorbestimmten Spannungspotentiale vorgesehen sind, von den Phasen getrennt werden.

Der eine oder die mehreren Brückenzweige, die zum Verbinden oder Trennen der übrigen Phasen mit bzw. von dem ersten vorbestimmten Spannungspotential vorgesehen sind, können in einer zweiten Fehlerbetriebsart betrieben werden, wenn eine Drehzahl der elektrischen Maschine über einer vorgegebenen Schwellendrehzahl liegt, wobei in der zweiten Fehlerbetriebsart der eine oder die mehreren übrigen Brückenzweige vollständig leitend geschaltet werden, um die übrigen Phasen mit dem ersten vorbestimmten Spannungspotential zu verbinden.

Es kann vorgesehen sein, dass der definierte elektrische Widerstand des einen oder der mehreren in der ersten Fehlerbetriebsart betriebenen Brückenzweige drehzahlabhängig und/oder abhängig von einem Motorstrom und/oder abhängig von einer Stellung eines Läufers der elektrischen Maschine variiert wird.

Weiterhin können der eine oder die mehreren übrigen Brückenzweige Halbleiterschalter aufweisen, die in der ersten Fehlerbetriebsart teilangesteuert betrieben werden, um den definierten elektrischen Widerstand zu bilden.

Weiterhin kann der definierte elektrische Widerstand zwischen dem elektrischen Widerstand eines der Brückenzweige beim Verbinden des ersten vorbestimmten Spannungspotentials mit den jeweiligen Phasen der elektrischen Maschine und dem elektrischen Widerstand eines der Brückenzweige beim Trennen des ersten vorbestimmten Spannungspotentials von den jeweiligen Phasen der elektrischen Maschine liegen.

Insbesondere kann in der ersten Fehlerbetriebsart der definierte elektrische Widerstand einem Widerstand zwischen einem halben und einem doppelten Strangwiderstand eines Phasenstrangs der elektrischen Maschine entsprechen.

Gemäß einem weiteren Aspekt ist eine Vorrichtung zum Betreiben einer mehrphasigen elektrischen Maschine in einem Fehlerfall, wobei die elektrische Maschine mithilfe einer Treiberschaltung angetrieben wird, wobei die Treiberschaltung Halbbrückenschaltungen, die jeweils einer Phase zugeordnet sind, und Brückenzweige zum Verbinden oder Trennen von vorbestimmten Spannungspotentialen mit bzw. von den jeweiligen Phasen der elektrischen Maschine aufweist, wobei die Vorrichtung ausgebildet ist, um, wenn ein Fehler festgestellt wird, einer oder mehrere der Brückenzweige gemäß einer ersten Fehlerbetriebsart zu betreiben, wobei die Vorrichtung weiterhin ausgebildet ist, um in der ersten Fehlerbetriebsart den einen oder die mehreren Brückenzweige so anzusteuern, dass sie ein erstes der vorbestimmten Spannungspotentiale über einen definierten elektrischen Widerstand mit der Phase verbinden.

Gemäß einem weiteren Aspekt ist ein Motorsystem vorgesehen, umfassend:
- eine mehrphasige elektrische Maschine
- eine Treiberschaltung, die Halbbrückenschaltungen, die jeweils einer Phase der elektrischen Maschine zugeordnet sind, und Brückenzweige zum Verbinden oder Trennen von vorbestimmten Spannungspotentialen mit bzw. von den jeweiligen Phasen der elektrischen Maschine aufweist, und
- die obige Vorrichtung.

Gemäß einem weiteren Aspekt ist ein Computerprogrammprodukt vorgesehen, das einen Programmcode enthält, der, wenn er auf einer Datenverarbeitungseinrichtung ausgeführt wird, das obige Verfahren durchführt.

### Kurzbeschreibung der Zeichnungen

Bevorzugte Ausführungsformen der vorliegenden Erfindung werden nachfolgend anhand der beigefügten Zeichnungen näher erläutert. Es zeigen:
- Figur 1: eine schematische Darstellung eines Motorsystems mit einer elektronisch kommutierten elektrischen Maschine;
- Figuren 2a-c: ein Diagramm zur Darstellung des Bremsmomentverlaufs abhängig von eine Drehzahl bei einem Dreiphasenschluss mit vollständig durchgeschalteten Halbleiterschaltern und bei einem Dreiphasenschluss, bei dem zumindest einer der Halbleiterschalter teilangesteuert betrieben wird; und
- Figur 3: ein Flussdiagramm zur Veranschaulichung eines Verfahrens zum Betreiben einer elektrischen Maschine in einem Fehlerfall.

### Beschreibung von Ausführungsformen

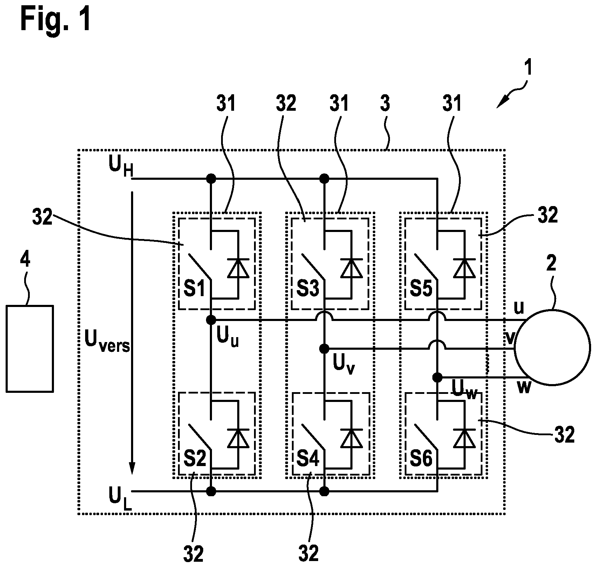

Figur 1 zeigt eine schematische Darstellung eines Motorsystems 1 mit einer elektrisch kommutierten elektrischen Maschine 2. Die elektrische Maschine 2 kann beispielsweise als Synchronmaschine, Asynchronmaschine, Reluktanzmaschine oder dergleichen ausgebildet sein. Die elektrische Maschine 2 ist mehrphasig, in dem gezeigten Ausführungsbeispiel dreiphasig, ausgebildet und weist die Phasen U, V, W auf. Die elektrische Maschine 2 ist elektronisch kommutiert, d. h. es werden gemäß einem Kommutierungsschema veränderliche Phasenspannungen bzw. Phasenströme an die elektrische Maschine 2 bzw. an Phasenstränge der elektrischen Maschine 2 angelegt.

Die Phasenspannungen U_{U}, U_{V}, U_{W} werden mithilfe einer Treiberschaltung 3 generiert, die durch eine Steuereinheit 4 angesteuert wird. Die Steuereinheit 4 kann beispielsweise als Mikrocontroller oder dergleichen ausgebildet sein und stellt Steuersignale bereit, mit denen Halbleiterschalter S1 bis S6 der Treiberschaltung 3 angesteuert werden können. Die Halbleiterschalter S1 bis S6 sind vorzugsweise als Leistungshalbleiterschalter, wie beispielsweise Leistungs-MOSFETs, Thyristoren, IGBTs, IGCTs oder dergleichen, vorgesehen.

Die Ansteuerung in der Steuereinheit 4 erfolgt gemäß dem Kommutierungsschema, das abhängig von einer Information über eine Lage eines Läufers der elektrischen Maschine 2 Schaltzustände für die Halbleiterschalter S1 bis S6 ermittelt. Die Steuereinheit 4 kann die Halbleiterschalter S1 bis S6 gemäß einer Pulsweitenmodulation ansteuern, um die an die Phasenstränge der elektrischen Maschine 2 anzulegende Phasenspannung zu variieren. Dadurch ist es möglich, die Halbleiterschalter S1 bis S6 mit nur zwei Signalpegeln variabel anzusteuern.

Die Treiberschaltung 3 ist als so genannte B6-Schaltung ausgeführt, um drei Phasenspannungen zum Anlegen an die elektrische Maschine 2 bereitzustellen. Die B6-Schaltung weist drei Halbbrückenschaltungen 31 auf, die zwischen einem ersten hohen Versorgungspotential V_{H} und einem zweiten niedrigen Versorgungspotential V_{L} einer Versorgungsspannung U_{Vers} angelegt sind. Jede der Halbbrückenschaltungen 31 weist einen unmittelbar mit dem hohen Versorgungspotential V_{H} verbundenen ersten Brückenzweig 32, die einen ersten Halbleiterschalter S1, S3, S5 umfasst, und einen zweiten unmittelbar mit dem niedrigen Versorgungspotential V_{L} verbundenen Brückenzweig 32 auf, die einen zweiten Halbleiterschalter S2, S4, S6 umfasst. Zwischen den miteinander verbundenen ersten und zweiten Halbleiterschaltern S1, S2; S3, S4; S5, S6 jeder Halbbrückenschaltung 31 wird eine der Phasenspannungen abgegriffen und der elektrischen Maschine 2 zugeführt.

In einem Fehlerfall, in dem einer der Halbleiterschalter S1 bis S6 permanent geschlossen ist, ist ein Weiterbetrieb der elektrischen Maschine 2 in der Regel nicht mehr möglich. Für viele Anwendungen ist es wichtig, die elektrische Maschine 2 in einen sicheren stromlosen Zustand zu bringen und die in den Phasensträngen gespeicherte Energie abzubauen. Gleichzeitig soll jedoch das von der elektrischen Maschine 2 ausgeübte Bremsmoment möglichst gering sein. Beispielsweise beim Einsatz in Lenkantrieben für Fahrzeuge kann ein solches Merkmal sicherheitsrelevant sein, da ein zu hohes Bremsmoment zu einem Verlust der Steuerbarkeit eines Fahrzeugs führen könnte.

Daher ist vorgesehen, die Funktion eines jeden der Halbleiterschalter S1 bis S6 permanent durch die Steuereinheit 4 zu überwachen und bei Feststellen eines Fehlers, bei dem einer der Halbleiterschalter S1 bis S6 nicht mehr geöffnet werden kann und daher permanent im geschlossenen (leitenden bzw. niederohmigen) Zustand verbleibt, einen Phasenschluss herbeizuführen. Bei einem Phasenschluss werden diejenigen der Halbleiterschalter S1 bis S6, die unmittelbar mit dem gleichen Versorgungspotential V_{H}, V_{L} verbunden sind wie der defekte Halbleiterschalter, geschlossen, während die übrigen der Halbleiterschalter S1 bis S6, d. h. die Halbleiterschalter, die unmittelbar mit dem entsprechend anderen der Versorgungspotentiale V_{H}, V_{L} verbunden sind, geöffnet werden, so dass die Phasenstränge der elektrischen Maschine 2 über die geschlossenen Halbleiterschalter elektrisch miteinander verbunden sind. Während dadurch die in der elektrische Maschine 2 gespeicherte elektrische Energie sehr schnell abgebaut werden kann, führt dies jedoch dazu, dass ein hoher Strom durch die Phasenstränge der elektrischen Maschine 2 fließt und dadurch ein hohes Bremsmoment der Bewegung des Läufers der elektrischen Maschine 2 entgegen wirkt.

Um das Bremsmoment zu reduzieren, ist nun vorgesehen, bei Auftreten eines Fehlers, bei dem einer der Halbleiterschalter S1 bis S6 permanent geschlossen ist, mindestens einen der Halbleiterschalter S1 bis S6, die unmittelbar mit dem gleichen Versorgungspotential verbunden sind, teilangesteuert zu betreiben, so dass diese zwar einen Stromfluss erlauben, jedoch einen Widerstand aufweisen, so dass die durch die Bewegung des Läufers induzierte Spannung nur einen reduzierten Stromfluss durch die Phasenstränge bewirken kann. Im Ergebnis kann der durch die induzierte Spannung bewirkte Stromfluss begrenzt werden. Zudem wirkt der Bewegung des Läufers der elektrischen Maschine 2 ein geringeres Bremsmoment entgegen und es wird dadurch die in den Phasenwicklungen der elektrischen Maschine gespeicherten Energie langsamer abgebaut als bei einem vollständigen niederohmigen Phasenschluss.

Im vorliegenden Ausführungsbeispiel kann beispielsweise angenommen werden, dass der Halbleiterschalter S6 fehlerhaft und somit permanent elektrisch leitend ist. Dies wird entsprechend der Überwachung durch die Steuereinheit 4, z. B. durch Überwachen des Spannungsabfalls über dem Halbleiterschalter, erkannt und die elektronische Kommutierung der elektrischen Maschine 2 wird gestoppt. Gleichzeitig werden die Halbleiterschalter S1, S3, S5, die mit der anderen Versorgungspotentialleitung als der defekte Halbleiterschalter S6 verbunden sind, geöffnet und die Halbleiterschalter S2, S4, die mit der gleichen Versorgungspotentialleitung wie der defekte Halbleiterschalter verbunden sind, teilangesteuert betrieben.

Die Teilansteuerung kann je nach Möglichkeiten der Steuereinheit 4 zum einen durch Anlegen einer Zwischenspannung als Steuerspannung erfolgen, wobei der durch die Halbleiterschalter S2, S4 fließende Strom durch Wahl der Steuerspannung eingestellt werden kann. Dadurch ergibt sich ein effektiver Widerstand durch den entsprechenden Halbleiterschalter S2, S4, der höher ist als bei einer Vollansteuerung.

Sieht die Steuereinheit 4 keine Ansteuerung der Halbleiterschalter mit einem Steuersignal vor, das einem analogen Spannungssignal entspricht, so kann auch vorgesehen sein, die entsprechenden Halbleiterschalter, die teilangesteuert werden sollen, pulsweitenmoduliert anzusteuern, wobei das Tastverhältnis der Pulsweitenmodulation so gewählt wird, dass sich im Mittel ein gewünschter Durchlasswiderstand der entsprechenden Halbleiterschalter S2, S4 einstellt.

Vorzugsweise wird die Teilansteuerung der teilanzusteuernden Halbleiterschalter so gewählt, dass diese einen effektiven Widerstand aufweisen, der in einem Bereich zwischen dem halben und dem doppelten Strangwiderstand der Phasenstränge liegt und insbesondere dem Strangwiderstand entspricht. Weiterhin ist der durch die Teilansteuerung bestimmte effektive Widerstandswert durch die thermische Belastbarkeit des MOSFETs begrenzt.

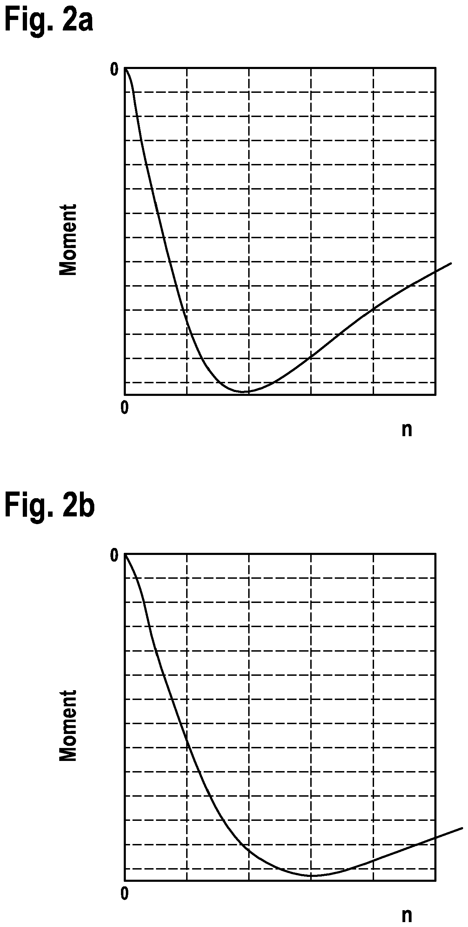

In den Figuren 2a und 2b sind die Bremsmomente über der Drehzahl einer elektrischen Maschine 2 dargestellt, wobei in Figur 2a die Phasenstränge der elektrischen Maschine 2 über einen Phasenschluss miteinander verbunden sind, während in dem Fall der Figur 2b die Phasenstränge der elektrischen Maschine 2 über lediglich teilangesteuerte Halbleiterschalter miteinander verbunden sind, so dass ein zusätzlicher Widerstand zwischen den Phasensträngen anliegt. Man erkennt, dass die Kurve im Fall der Figur 2b in den Bereich höherer Drehzahlen verschoben ist, so dass sich bei niedrigeren Drehzahlen ein geringeres Bremsmoment einstellt. Weiterhin erkennt man, dass das Bremsmoment auch in einem Bereich höherer Drehzahlen wieder abnimmt.

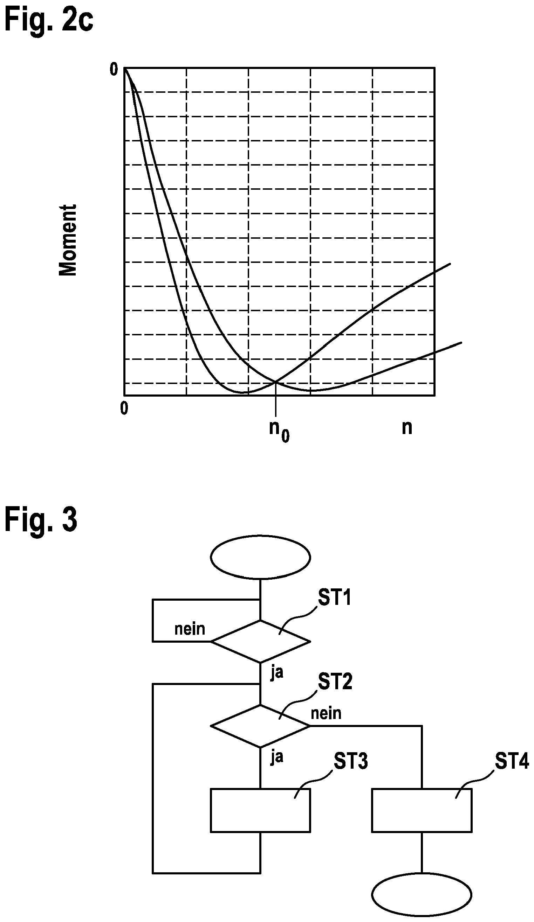

In Figur 3 ist ein Flussdiagramm zur Veranschaulichung eines Verfahrens zum Betreiben einer elektrischen Maschine in einem Fehlerfall dargestellt. Wird in einer Abfrage eines Schritts ST1 festgestellt, dass ein Fehler aufgetreten ist, bei dem einer der Halbleiterschalter S1 bis S6 trotz gegenteiliger Ansteuerung dauerhaft geschlossen bleibt (Alternative: Ja), so wird in Schritt ST2 die Drehzahl n der elektrischen Maschine bezüglich einer vorgegebenen oder errechneten Schwellendrehzahl n₀ überprüft. Ansonsten (Alternative: Nein) wird in Schritt ST1 weiter auf einen Fehlerfall gewartet.

Wird in Schritt ST2 festgestellt, dass die Drehzahl n über der Schwellendrehzahl n₀ liegt (Alternative: Ja), so werden in Schritt ST3 zunächst die noch intakten Halbleiterschalter S1 bis S6 so angesteuert, dass ein vollständiger Phasenschluss erreicht wird, indem alle zu schließenden Halbleiterschalter S1, S3, S5 oder S2, S4, S6 vollständig geschlossen werden, so dass sie maximal leitend werden. Es wird zu der Abfrage des Schritts ST2 zurückgesprungen.

Wird in Schritt ST2 festgestellt, dass die Drehzahl n unter oder bei der Schwellendrehzahl n₀ liegt (Alternative: Nein), so wird in Schritt ST4 auf den oben beschriebenen teilangesteuerten Betrieb der noch intakten Halbleiterschalter umgeschaltet.

In Figur 2c ist die Überlagerung der Verläufe der Figuren 2a und 2b dargestellt. Mit dem obigen Verfahren kann erreicht werden, beide Betriebsarten so auszuwählen, dass über den gesamten Drehzahlbereich das jeweils niedrigste Bremsmoment erreicht werden kann.

Selbstverständlich kann auch vorgesehen sein, verschiedene Teilansteuerungen der teilanzusteuernden Halbleiterschalter vorzusehen, indem mehrere effektive Widerstände der teilangesteuerten Halbleiterschalter durch entsprechende Ansteuerung eingestellt werden. Diese können dann jeweils in bestimmten Drehzahlbereichen (bei Vorsehen von mehreren Schwellendrehzahlen) eingestellt werden.

Selbstverständlich kann auch vorgesehen sein, die Teilansteuerung der teilanzusteuernden Halbleiterschalter variabel vorzusehen, so dass die teilanzusteuernden Halbleiterschalter jeweils so eingestellt werden, dass ein quasi gleich bleibendes Bremsmoment über einen großen Drehzahlbereich erreicht wird.

## Patentansprüche

1. Verfahren zum Betreiben einer mehrphasigen elektrischen Maschine (2) in einem Fehlerfall, wobei die elektrische Maschine (2) mithilfe einer Treiberschaltung (3) angetrieben wird, wobei die Treiberschaltung (3) Halbbrückenschaltungen (31), die jeweils einer Phase (U, V, W) zugeordnet sind, und Brückenzweige (32) zum elektrischen Verbinden oder Trennen von vorbestimmten Spannungspotentialen mit bzw. von den jeweiligen Phasen (U, V, W) der elektrischen Maschine (2) aufweist,
wobei, wenn ein Fehler festgestellt wird, einer oder mehrere der Brückenzweige (32) gemäß einer ersten Fehlerbetriebsart betrieben werden, **dadurch gekennzeichnet, dass**
in der ersten Fehlerbetriebsart der eine oder die mehreren nicht fehlerhaften Brückenzweige (32) so angesteuert werden, dass sie ein erstes der vorbestimmten Spannungspotentiale über einen vorbestimmten elektrischen Widerstand mit der Phase (U, V, W), die an die jeweilige Halbbrückenschaltung (31) angeschlossen ist, verbinden, wobei der eine oder die mehreren Brückenzweige (32) Halbleiterschalter (S1, S2, S3, S4, S5, S6) aufweisen, die in der ersten Fehlerbetriebsart teilangesteuert betrieben werden, um den vorbestimmten elektrischen Widerstand zu bilden.

2. Verfahren nach Anspruch 1, wobei der Fehler einem Kurzschluss zwischen zwei der Phasen (U, V, W), einem Kurzschluss einer Phase (U, V, W) zu einem Spannungspotential oder einem dauerhaft geöffneten Brückenzweig entspricht.

3. Verfahren nach Anspruch 1, wobei, wenn als ein Fehler festgestellt wird, dass einer der Brückenzweige (32) fehlerhaft ist und eine Phase (U, V, W) der elektrischen Maschine (2) permanent mit dem ersten vorbestimmten Spannungspotential verbindet, einer oder mehrere der übrigen Brückenzweige (32), die zum Verbinden oder Trennen der übrigen Phasen (U, V, W) mit bzw. von dem ersten vorbestimmten Spannungspotential vorgesehen sind, in der ersten Fehlerbetriebsart betrieben werden, bei der die entsprechenden Brückenzweige (32) so angesteuert werden, dass sie das erste vorbestimmte Spannungspotential über einen definierten elektrischen Widerstand mit der Phase (U, V, W) verbinden.

4. Verfahren nach Anspruch 3, wobei der eine oder die mehreren übrigen Brückenzweige (32), die zum Verbinden oder Trennen der übrigen Phasen (U, V, W) mit bzw. von dem ersten vorbestimmten Spannungspotential vorgesehen sind, in der ersten Fehlerbetriebsart betrieben werden, wenn eine Drehzahl der elektrischen Maschine (2) unter einer vorgegebenen Schwellendrehzahl liegt.

5. Verfahren nach Anspruch 3 oder 4, wobei in der ersten Fehlerbetriebsart die übrigen Brückenzweige (32), die zum Verbinden oder Trennen der übrigen Phasen (U, V, W) mit bzw. von einem zweiten der vorbestimmten Spannungspotentiale vorgesehen sind, von den Phasen (U, V, W) getrennt werden.

6. Verfahren nach Anspruch 4, wobei der eine oder die mehreren Brückenzweige (32), die zum Verbinden oder Trennen der übrigen Phasen (U, V, W) mit bzw. von dem ersten vorbestimmten Spannungspotential vorgesehen sind, in einer zweiten Fehlerbetriebsart betrieben werden, wenn eine Drehzahl der elektrischen Maschine (2) über einer vorgegebenen Schwellendrehzahl liegt, wobei in der zweiten Fehlerbetriebsart der eine oder die mehreren übrigen Brückenzweige (32) vollständig leitend geschaltet werden, um die übrigen Phasen mit dem ersten vorbestimmten Spannungspotential zu verbinden.

7. Verfahren nach einem der Ansprüche 1 bis 6, wobei der definierte elektrische Widerstand des einen oder der mehreren in der ersten Fehlerbetriebsart betriebenen Brückenzweige (32) drehzahlabhängig und/oder abhängig von einem Motorstrom und/oder abhängig von einer Stellung eines Läufers der elektrischen Maschine (2) variiert wird.

8. Verfahren nach einem der Ansprüche 1 bis 7, wobei der Wert des vorbestimmten elektrischen Widerstands zwischen dem Wert des elektrischen Widerstands eines der Brückenzweige (32) beim Verbinden des ersten vorbestimmten Spannungspotentials mit den jeweiligen Phasen (U, V, W) der elektrischen Maschine (2) und dem Wert des elektrischen Widerstands eines der Brückenzweige (32) beim Trennen des ersten vorbestimmten Spannungspotentials von den jeweiligen Phasen (U, V, W) der elektrischen Maschine (2) liegt.

9. Verfahren nach Anspruch 8, wobei in der ersten Fehlerbetriebsart der definierte elektrische Widerstand einem Widerstand zwischen einem halben und einem doppelten Strangwiderstand eines Phasenstrangs der elektrischen Maschine (2) entspricht.

10. Vorrichtung zum Betreiben einer mehrphasigen elektrischen Maschine (2) in einem Fehlerfall, wobei die elektrische Maschine (2) mithilfe einer Treiberschaltung (3) angetrieben wird, wobei die Treiberschaltung (3) Halbbrückenschaltungen (31), die jeweils einer Phase (U, V, W) zugeordnet sind, und Brückenzweige (32) zum elektrischen Verbinden oder Trennen von vorbestimmten Spannungspotentialen mit bzw. von den jeweiligen Phasen (U, V, W) der elektrischen Maschine (2) aufweist,
wobei die Vorrichtung ausgebildet ist, um, wenn ein Fehler festgestellt wird, einer oder mehrere der Brückenzweige (32) gemäß einer ersten Fehlerbetriebsart zu betreiben,
**dadurch gekennzeichnet, dass**
die Vorrichtung weiterhin ausgebildet ist, um in der ersten Fehlerbetriebsart der eine oder die mehreren nicht fehlerhaften Brückenzweige (32) so anzusteuern, dass sie ein erstes der vorbestimmten Spannungspotentiale über einen vorbestimmten elektrischen Widerstand mit der Phase, die an die jeweilige Halbbrückenschaltung (31) angeschlossen ist, verbinden, wobei der eine oder die mehreren Brückenzweige (32) Halbleiterschalter (S1, S2, S3, S4, S5, S6) aufweisen,
wobei die Vorrichtung weiterhin ausgebildet ist, um die Halbleiterschalter (S1, S2, S3, S4, S5, S6) in der ersten Fehlerbetriebsart teilangesteuert zu betreiben, um den vorbestimmten elektrischen Widerstand zu bilden.

11. Motorsystem umfassend:
- eine mehrphasige elektrische Maschine (2);
- eine Treiberschaltung (3), die Halbbrückenschaltungen (31), die jeweils einer Phase der elektrischen Maschine (2) zugeordnet sind, und Brückenzweige (32) zum Verbinden oder Trennen von vorbestimmten Spannungspotentialen mit bzw. von den jeweiligen Phasen (U, V, W) der elektrischen Maschine (2) aufweist, und
- eine Vorrichtung nach Anspruch 10.

12. Computerprogrammprodukt, das einen Programmcode enthält, der, wenn er auf einer Datenverarbeitungseinrichtung ausgeführt wird, das Verfahren nach einem, der Ansprüche 1 bis 8 durchführt.

## Claims

1. Method for operating a multiphase electrical machine (2) in the event of a malfunction, wherein the electrical machine (2) is driven with the aid of a driver circuit (3), wherein the driver circuit (3) comprises half-bridge circuits (31), which are allocated in each case to a phase (U, V, W), and bridge branches (32) for electrically connecting or disconnecting predefined voltage potentials to and/or from the respective phases (U, V, W) of the electrical machine (2),
wherein, if a malfunction is established, one or a multiple of the bridge branches (32) are operated in accordance with a first malfunction operation mode,
**characterized in that**:
in the first malfunction operation mode the one or the multiple non-defective bridge branches (32) are controlled so that they connect a first predefined voltage potential of the predefined voltage potentials to the phase (U, V, W), which is connected to the respective half-bridge circuit (31), by way of a predefined electrical resistance,
wherein the one or the multiple bridge branches (32) comprise semiconductor switches (S1, S2, S3, S4, S5, S6) that are operated in the first malfunction operation mode in a partially controlled manner in order to form the predefined electrical resistance.

2. Method according to Claim 1, wherein the malfunction corresponds to a short circuit between two of the phases (U, V, W), a short circuit of a phase (U, V, W) to a voltage potential or a permanently open bridge branch.

3. Method according to Claim 1, wherein, if it is established as a malfunction that one of the bridge branches (32) is defective and one phase (U, V, W) of the electrical machine (2) is permanently connected to the first predefined voltage potential, one or a multiple of the remaining bridge branches (32) that are provided for connecting or disconnecting the remaining phases (U, V, W) to and/or from the first predefined voltage potential are operated in the first malfunction operation mode, in which the corresponding bridge branches (32) are controlled so that they connect the first predefined voltage potential to the phase (U, V, W) by way of a defined electrical resistance.

4. Method according to Claim 3, wherein the one or the multiple remaining bridge branches (32) that are provided for connecting or disconnecting the remaining phases (U, V, W) to and/or from the first predefined voltage potential are operated in the first malfunction operation mode if a rotational, speed of the electrical machine (2) is below a predetermined threshold rotational speed.

5. Method according to Claim 3 or 4, wherein in the first malfunction operation mode the remaining bridge branches (32) that are provided for connecting or disconnecting the remaining phases (U, V, W) to and/or from a second voltage potential of the predefined voltage potentials are disconnected from the phases (U, V, W).

6. Method according to Claim 4, wherein the one or the multiple bridge branches (32) that are provided for connecting or disconnecting the remaining phases (U, V, W) to and/or from the first predefined voltage potential are operated in a second malfunction operation mode if a rotational speed of the electrical machine (2) is above a predetermined threshold rotational speed, wherein in the second malfunction operation mode the one or the multiple remaining bridge branches (32) are switched to be completely conductive in i order to connect the remaining phases to the first predefined voltage potential.

7. Method according to any one of Claims 1 to 6, wherein the defined electrical resistance of the one or the multiple bridge branches (32) that are operated in the first malfunction mode is varied in dependence upon the rotational speed and/or in dependence upon a motor current and/or in dependence upon a position of a rotor of the electrical machine (2).

8. Method according to any one of Claims 1 to 7, wherein the value of the predefined electrical resistance is between the value of the electrical resistance of one of the bridge branches (32) in the case of the first predefined voltage potential being connected to the respective phases (U, V, W) of the electrical machine (2) and the value of the electrical resistance of one of the bridge branches (32) in the case of the first predefined voltage potential being disconnected from the respective phases (U, V, W) of the electrical machine (2).

9. Method according to Claim 8, wherein in the first malfunction operation mode the defined electrical resistance corresponds to a resistance between a half line resistance and a double line resistance of a phase line of the electrical machine (2).

10. Device for operating a multiphase electrical machine (2) in the event of a malfunction, wherein the electrical machine (2) is driven with the aid of a driver circuit (3), wherein the driver circuit (3) comprises half-bridge circuits (31), which are allocated in each case to a phase (U, V, W), and bridge branches (32) for electrically connecting or disconnecting predefined voltage potentials to and/or from the respective phases (U, V, W) of the electrical machine (2),
wherein the device is designed so as, if a malfunction is established, to operate one or a multiple of the bridge branches (32) in accordance with a first malfunction operation mode,
**characterized in that**:
the device is furthermore designed so as in the first malfunction operation mode to control the one or the multiple non-defective bridge branches (32) so that they connect a first predefined voltage potential of the predefined voltage potentials to the phase, which is connected to the respective half-bridge circuit (31), by way of a predefined electrical resistance,
wherein the one or the multiple bridge branches (32) comprise semiconductor switches (S1, S2, S3, S4, S5, S6), wherein the device is furthermore designed to operate the semiconductor switches (S1, S2, S3, S4, S5, S6) in the first malfunction operation mode in a partially controlled manner in order to form the predefined electrical resistance.

11. Motor system comprising:
- a multiphase electrical machine (2);
- a driver circuit (3), the half-bridge circuits (31), which are allocated in each case to a phase of the electrical machine (2), and bridge branches (32) for connecting or disconnecting predefined voltage potentials to and/or from the respective phases (U, V, W) of the electrical machine (2), and
- a device according to Claim 10.

12. Computer program product that has a program code that performs the method according to any one of Claims 1 to 8 if said program code is implemented on a data processing device.

## Revendications

1. Procédé pour faire fonctionner une machine électrique (2) multiphasée dans le cas d'un défaut, la machine électrique (2) étant entraînée à l'aide d'un circuit d'attaque (3), le circuit d'attaque (3) possédant des circuits en demi-pont (31) qui sont respectivement associés à une phase (U, V, W) ainsi que des branches de pont (32) destinées à la connexion ou à la déconnexion électrique de potentiels de tension prédéfinis aux ou des phases (U, V, W) respectives de la machine électrique (2),
selon lequel, lorsqu'un défaut est constaté, une ou plusieurs des branches de pont (32) sont mises à fonctionner selon un premier mode de fonctionnement de défaut,
**caractérisé en ce que**
dans le premier mode de fonctionnement de défaut, la ou les plusieurs branches de pont (32) qui ne sont pas en défaut sont pilotées de telle sorte qu'elles connectent, par le biais d'une résistance électrique prédéfinie, un premier des potentiels de tension prédéfinis à la phase (U, V, W) qui est raccordée au circuit en demi-pont (31) correspondant,
la ou les plusieurs branches de pont (32) possédant des commutateurs à semiconducteur (S1, S2, S3, S4, S5, S6) qui, dans le premier mode de fonctionnement de défaut, fonctionnent avec pilotage partiel en vue de former la résistance électrique prédéfinie.

2. Procédé selon la revendication 1, le défaut correspondant à un court-circuit entre deux des phases (U, V, W), à un court-circuit d'une phase (U, V, W) avec un potentiel de tension ou à une branche de pont ouverte en permanence.

3. Procédé selon la revendication 1, selon lequel, lorsque le défaut constaté est la défaillance d'une des branches de pont (32) qui relie une phase (U, V, W) de la machine électrique (2) en permanence avec le premier potentiel de tension prédéfini, une ou plusieurs des autres branches de pont (32) qui sont prévues pour connecter ou déconnecter les autres phases (U, V, W) au ou du premier potentiel de tension prédéfini sont mises à fonctionner dans le premier mode de fonctionnement de défaut, avec lequel les branches de pont (32) correspondantes sont pilotées de telle sorte qu'elles connectent le premier potentiel de tension prédéfini à la phase (U, V, W) par le biais d'une résistance électrique définie.

4. Procédé selon la revendication 3, la ou les plusieurs autres branches de pont (32) qui sont prévues pour connecter ou déconnecter les autres phases (U, V, W) au ou du premier potentiel de tension prédéfini étant mises à fonctionner dans le premier mode de fonctionnement de défaut lorsqu'une vitesse de rotation de la machine électrique (2) est inférieure à une valeur de rotation de seuil prédéfinie.

5. Procédé selon la revendication 3 ou 4, selon lequel, dans le premier mode de fonctionnement de défaut, les autres branches de pont (32) qui sont prévues pour connecter ou déconnecter les autres phases (U, V, W) à ou d'un deuxième potentiel de tension prédéfini sont déconnectées des phases (U, V, W).

6. Procédé selon la revendication 4, la ou les plusieurs autres branches de pont (32) qui sont prévues pour connecter ou déconnecter les autres phases (U, V, W) au ou du premier potentiel de tension prédéfini étant mises à fonctionner dans un deuxième mode de fonctionnement de défaut lorsqu'une vitesse de rotation de la machine électrique (2) est supérieure à une valeur de rotation de seuil prédéfinie, la ou les plusieurs autres branches de pont (32) dans le deuxième mode de fonctionnement de défaut étant commutées entièrement passantes afin de connecter les autres phases au premier potentiel de tension prédéfini.

7. Procédé selon l'une des revendications 1 à 6, la résistance électrique définie de la ou des plusieurs branches de pont (32) qui fonctionnent dans le premier mode de fonctionnement de défaut étant variée en fonction de la vitesse de rotation et/ou en fonction d'un courant de moteur et/ou en fonction d'une position d'un rotor de la machine électrique (2).

8. Procédé selon l'une des revendications 1 à 7, la valeur de la résistance électrique prédéfinie se trouvant entre la valeur de la résistance électrique de l'une des branches de pont (32) lors de la connexion du premier potentiel de tension prédéfini aux phases (U, V, W) respectives de la machine électrique (2) et la valeur de la résistance électrique de l'une des branches de pont (32) lors de la déconnexion du premier potentiel de tension prédéfini des phases (U, V, W) respectives de la machine électrique (2).

9. Procédé selon la revendication 8, selon lequel, dans le premier mode de fonctionnement de défaut, la résistance électrique définie correspond à une résistance entre une moitié et une double résistance de conducteur d'un conducteur de phase de la machine électrique (2).

10. Dispositif pour faire fonctionner une machine électrique (2) multiphasée dans le cas d'un défaut, la machine électrique (2) étant entraînée à l'aide d'un circuit d'attaque (3), le circuit d'attaque (3) possédant des circuits en demi-pont (31) qui sont respectivement associés à une phase (U, V, W) ainsi que des branches de pont (32) destinées à la connexion ou à la déconnexion électrique de potentiels de tension prédéfinis aux ou des phases (U, V, W) respectives de la machine électrique (2),
le dispositif étant configuré pour, lorsqu'un défaut est constaté, faire fonctionner une ou plusieurs des branches de pont (32) selon un premier mode de fonctionnement de défaut,
**caractérisé en ce que**
le dispositif est en outre configuré pour, dans le premier mode de fonctionnement de défaut, piloter la ou les plusieurs branches de pont (32) qui ne sont pas en défaut de telle sorte qu'elles connectent, par le biais d'une résistance électrique prédéfinie, un premier des potentiels de tension prédéfinis à la phase qui est raccordée au circuit en demi-pont (31) correspondant,
la ou les plusieurs branches de pont (32) possédant des commutateurs à semiconducteur (S1, S2, S3, S4, S5, S6), le dispositif étant en outre configuré pour, dans le premier mode de fonctionnement de défaut, faire fonctionner les commutateurs à semiconducteur (S1, S2, S3, S4, S5, S6) avec pilotage partiel en vue de former la résistance électrique prédéfinie.

11. Système à moteur comprenant :
- une machine électrique (2) multiphasée ;
- un circuit d'attaque (3) qui possède des circuits en demi-pont (31) qui sont respectivement associés à une phase de la machine électrique (2), et des branches de pont (32) destinées à la connexion ou à la déconnexion de potentiels de tension prédéfinis aux ou des phases (U, V, W) respectives de la machine électrique (2) ; et
- un dispositif selon la revendication 10.

12. Produit de programme informatique qui contient un code de programme qui, lorsqu'il est exécuté sur un appareil de traitement de données, met en oeuvre le procédé selon l'une des revendications 1 à 8.
